(19) Europäisches Patentamt / European Patent Office / Office européen des brevets

(11) EP 2 847 266 B1

(12) EUROPEAN PATENT SPECIFICATION

(45) Date of publication and mention of the grant of the patent: **13.03.2019 Bulletin 2019/11**

(21) Application number: **12876481.8**

(22) Date of filing: **10.05.2012**

(51) Int Cl.:
***H01B 3/44*** *(2006.01)*
***H01B 13/06*** *(2006.01)*
***H01B 3/30*** *(2006.01)*
***C09D 123/06*** *(2006.01)*
***C08L 9/00*** *(2006.01)*
***C08K 5/14*** *(2006.01)*
***C08L 23/06*** *(2006.01)*

(86) International application number: **PCT/CN2012/075287**

(87) International publication number: **WO 2013/166683 (14.11.2013 Gazette 2013/46)**

# (54) ETHYLENE POLYMER CONDUCTOR COATINGS PREPARED WITH POLYBUTADIENE CROSS-LINKING COAGENTS

AUS POLYBUTADIENVERNETZUNGS-COINITIATOREN HERGESTELLTE ETHYLENPOLYMERLEITERBESCHICHTUNGEN

REVÊTEMENTS DE CONDUCTEUR POLYMÈRE D'ÉTHYLÈNE PRÉPARÉS AVEC DES CO-RÉACTIFS DE RÉTICULATION À BASE DE POLYBUTADIÈNE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application: **18.03.2015 Bulletin 2015/12**

(73) Proprietor: **Dow Global Technologies LLC**
**Midland, MI 48674 (US)**

(72) Inventors:
- **SUN, Yabin**
  **Shanghai 201203 (CN)**
- **MENG, Fanliang**
  **Shanghai 201100 (CN)**
- **ZHU, Lu Journey**
  **Shanghai 200240 (CN)**
- **LI, Bin**
  **Pearland**
  **Texas 77584 (US)**

(74) Representative: **Boult Wade Tennant LLP**
**Verulam Gardens**
**70 Gray's Inn Road**
**London WC1X 8BT (GB)**

(56) References cited:
**EP-A1- 1 036 804**
**EP-A1- 2 015 315**
**EP-A1- 2 072 576**
**EP-A1- 2 498 262**
**CN-A- 101 652 417**
**CN-A- 102 408 613**
**US-A- 5 962 592**
**US-B1- 6 228 917**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 847 266 B1

## Description

FIELD

Various embodiments of the present invention relate to polymeric coating compositions for making coated conductors. Other aspects of the invention concern polymeric coating compositions comprising polybutadiene cross-linking coagents.

INTRODUCTION

Medium, high, and extra-high voltage ("MV," "HV," and "EHV") cables typically contain a peroxide cross-linked ethylene polymer material as an insulation layer. Although cross-linking provides valuable improvement in thermomechanical properties of the material, the peroxide used for cross-linking creates byproducts that require removal from the material after it is formed into an insulation layer (e.g., by degassing) but before a jacketing layer is placed over the insulation layer. In the case of dicumyl peroxide, these byproducts include methane, acetophenone, alpha methylstyrene, and cumyl alcohol. Although work has been undertaken to discover an insulation material that does not require degassing, no viable solution has been identified. Accordingly, improvements are still desired.

SUMMARY

One embodiment is a process for producing a coated conductor, said process comprising:

(a) coating a conductor with a polymeric coating composition, wherein said polymeric coating composition comprises an ethylene polymer, an organic peroxide, and a polybutadiene;
(b) cross-linking at least a portion of said polymeric coating composition thereby producing a cross-linked polymeric coating composition, wherein said cross-linking produces one or more byproducts, wherein said byproducts comprise methane, acetophenone, or both; and
(c) degassing at least a portion of said cross-linked polymeric coating composition for a degassing time period and at a degassing temperature to remove at least a portion of said byproducts thereby producing a degassed polymeric coating composition,

wherein said degassing time period of step (c) is sufficient to achieve a reduction in methane content and/or acetophenone content of at least 50 wt% and is at least 30% less than the degassing time period required for a reference coated conductor to achieve the same reduction in methane and/or acetophenone content, wherein said methane content reduction and/or acetophenone content reduction is determined from the methane content and/or acetophenone content of said reference coated conductor prior to said degassing for each of said coated conductor and said reference coated conductor,
wherein said reference coated conductor has the same composition and structure, and is prepared in same manner as the coated conductor, except that the polymeric coating composition of the reference coated conductor comprises at least 41 wt% more organic peroxide and does not contain any polybutadiene.

BRIEF DESCRIPTION OF THE DRAWINGS

FIG. 1 is a plot of time versus byproduct content for the samples prepared in Examples 1 and 2, degassed at 80 °C; and
FIG. 2 is a plot of time versus byproduct content for the samples prepared in Examples 1 and 2, degassed at 175 °C.

DETAILED DESCRIPTION

Various embodiments of the present invention concern a process for producing a coated conductor. The process includes coating a conductor with a polymeric coating composition that comprises an ethylene polymer, an organic peroxide, and a polybutadiene cross-linking coagent. Thereafter, the polymeric composition is cross-linked, followed by degassing.

*Polymeric Coating Composition*

The ethylene polymer employed can be any conventional or hereafter discovered ethylene polymer. In an

embodiment, the ethylene polymer can be produced using conventional ethylene polymer polymerization technology (e.g., high-pressure, Ziegler-Natta, metallocene, or constrained geometry catalysis). In one embodiment, the ethylene polymer is made using a high pressure process. In another embodiment, the ethylene polymer is made using a mono- or bis-cyclopentadienyl, indenyl, or fluorenyl transition metal (preferably Group 4) catalysts or constrained geometry catalysts ("CGC") in combination with an activator, in a solution, slurry, or gas-phase polymerization process. The catalyst is preferably mono-cyclopentadienyl, mono-indenyl or mono-fluorenyl CGC. USP 5,064,802, WO93/19104 and WO95/00526 disclose constrained geometry metal complexes and methods for their preparation. Variously substituted indenyl-containing metal complexes are taught in WO95/14024 and WO98/49212.

In general, polymerization can be accomplished at conditions known in the art for Ziegler-Natta or Kaminsky-Sinn type polymerization reactions, that is, at temperatures from 0 to 250 °C, or 30 or 200 °C, and pressures from atmospheric to 10,000 atmospheres (1,013 megaPascal ("MPa")). In most polymerization reactions, the molar ratio of catalyst to polymerizable compounds employed is from $10^{-12}$:1 to $10^{-1}$:1, or from $10^{-9}$:1 to $10^{-5}$:1.

In various embodiments, the ethylene polymer can be an ethylene homopolymer. As used herein, the term "homopolymer" denotes a polymer comprising repeating units derived from a single monomer type, but does not exclude residual amounts of other components used in preparing the homopolymer, such as chain transfer agents.

In an embodiment, the ethylene polymer can be an ethylene/$\alpha$-olefin interpolymer having an $\alpha$-olefin content of at least 15, at least 20, and or at least 25 weight percent ("wt%") based on the weight of the interpolymer. These interpolymers have an $\alpha$-olefin content of less than 50, less than 45, less than 40, or less than 35 wt% based on the weight of the interpolymer.

When an $\alpha$-olefin is employed, the $\alpha$-olefin can be a $C_{3-20}$ (i.e., having 3 to 20 carbon atoms) linear, branched or cyclic $\alpha$-olefin. Examples of $C_{3-20}$ $\alpha$-olefins include propene, 1-butene, 4-methyl-1-pentene, 1-hexene, 1-octene, 1-decene, 1-dodecene, 1-tetradecene, 1-hexadecene, and 1-octadecene. The $\alpha$-olefins can also have a cyclic structure such as cyclohexane or cyclopentane, resulting in an $\alpha$-olefin such as 3-cyclohexyl-1-propene (allyl cyclohexane) and vinyl cyclohexane. Illustrative ethylene/$\alpha$-olefin interpolymers include ethylene/propylene, ethylene/butene, ethylene/1-hexene, ethylene/1-octene, ethylene/styrene, ethylene/propylene/1-octene, ethylene/propylene/butene, ethylene/butene/1-octene, and ethylene/butene/styrene.

The ethylene polymers can be used alone or in combination with one or more other types of ethylene polymers (e.g., a blend of two or more ethylene polymers that differ from one another by monomer composition and content, catalytic method of preparation, etc). If the ethylene polymer is a blend of two or more ethylene polymers, then the ethylene polymer can be blended by any in-reactor or post-reactor process.

In an embodiment, the ethylene polymer can have a density from 0.86 to 0.95 gram/ cubic centimeter ("$cm^3$"), as determined according to ASTM D-792. The ethylene polymer can have a melt index ("$I_2$") from 0.1 to 50 gram per 10 minutes ("g/10 min"), as determined according to ASTMD-1238 (190 °C / 2.16 kg).

Examples of commercially available ethylene polymers that can be employed include very low density polyethylene ("VLDPE"), such as FLEXOMER™ made by The Dow Chemical Company; homogeneously branched, linear ethylene/$\alpha$-olefin copolymers, such as TAFMER™ by Mitsui Petrochemicals Company Limited, and EXACT™ by Exxon Chemical Company; homogeneously branched, substantially linear ethylene/$\alpha$-olefin polymers, such as AFFINITY™ and ENGAGE™ available from The Dow Chemical Company; and ethylene block copolymers, such as INFUSE™ ethylene polymer available from The Dow Chemical Company.

The polymeric coating composition further includes an organic peroxide cross-linking agent. As used herein, the term "organic peroxide" shall denote a peroxide having the structure: $R^1$-O-O-$R^2$, or $R^1$-O-O-R-O-O-$R^2$, where each of $R^1$ and $R^2$ is a hydrocarbyl moiety, and R is a hydrocarbylene moiety. As used herein, the term "hydrocarbyl" denotes a univalent group formed by removing a hydrogen atom from a hydrocarbon (e.g. ethyl, phenyl). As used herein, the term "hydrocarbylene" denotes a divalent group formed by removing two hydrogen atoms from a hydrocarbon. The organic peroxide can be any dialkyl, diaryl, dialkaryl, or diaralkyl peroxide, having the same or differing alkyl, aryl, alkaryl, or aralkyl moieties. In an embodiment, each of $R^1$ and $R^2$ is independently a $C_1$ to $C_{20}$ or $C_1$ to $C_{12}$ alkyl, aryl, alkaryl, or aralkyl moiety. In an embodiment, R can be a $C_1$ to $C_{20}$ or $C_1$ to $C_{12}$ alkylene, arylene, alkarylene, or aralkylene moiety. In various embodiments, R, $R^1$, and $R^2$ can have the same or a different number of carbon atoms, or any two of R, $R^1$, and $R^2$ can have the same number of carbon atoms while the third has a different number of carbon atoms. Exemplary organic peroxides include dicumyl peroxide; tert-butyl peroxybenzoate; di-tert-amyl peroxide; bis(alpha-t-butyl-peroxyisopropyl) benzene; isopropylcumyl t-butyl peroxide; t-butylcumylperoxide; di-t-butyl peroxide; 2,5-bis(t-butylperoxy)-2,5-dimethylhexane; 2,5-bis(t-butylperoxy)-2,5-dimethylhexyne-3; 1,1-bis(t-butylperoxy)3,3,5-trimethylcyclohexane; isopropylcumyl cumylperoxide; butyl 4,4-di(tert-butylperoxy)valerate; di(isopropylcumyl) peroxide; and mixtures of two or more thereof In an embodiment, the organic peroxide is dicumyl peroxide.

The polymeric coating composition further includes a polybutadiene cross-linking coagent. The polybutadiene can be any known polybutadiene known or hereafter discovered in the art. As known in the art, polybutadienes have varying structures, as shown in the structure, below:

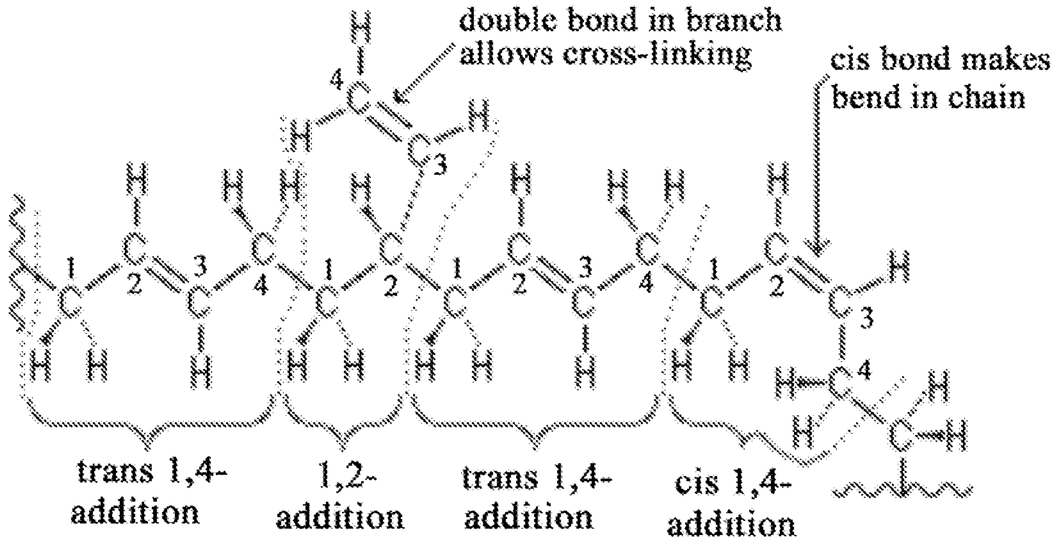


As seen above, polybutadiene can have trans 1,4-vinyl groups, cis 1,4-vinyl groups, and 1,2-vinyl groups. In various embodiments, the polybutadiene cross-linking coagent can have a 1,2-vinyl content of at least 70, at least 80, or at least 85 wt% based on the entire weight of the polybutadiene. In various embodiments, the polybutadiene can have a number average molecular weight ("Mn") of 10,000 g/mol or less, 8,000 g/mol or less, 6,000 g/mol or less, or 5,000 g/mol or less. In an embodiment, the polybutadiene can be a liquid at 1 atmosphere (~101.3 kPa) and 22 °C. Examples of commercially available polybutadienes include RICON™ 150, RICON™ 152, RICON™ 153, and RICON™ 156, each available from Cray Valley Technology, USA LLC.

In various embodiments, the polymeric coating composition can comprise the ethylene polymer in an amount ranging from 80 to 99 wt%, from 90 to 99 wt%, or from 95 to 98 wt%, based on the combined weight of the ethylene polymer, the organic peroxide, and the polybutadiene. Additionally, the polymeric coating composition can comprise the organic peroxide in an amount ranging from 0.5 to 1.7 wt%, from 0.8 to 1.4 wt%, from 1.0 to 1.4 wt%, from 1.0 to 1.2 wt%, or from 1.1 to 1.2 wt%, based on the combined weight of the ethylene polymer, the organic peroxide, and the polybutadiene. Furthermore, the polymeric coating composition can comprise the polybutadiene in an amount ranging from 0.1 to 10 wt%, from 0.5 to 6 wt%, or from 1.5 to 3 wt%, based on the combined weight of the ethylene polymer, the organic peroxide, and the polybutadiene.

The polymeric coating composition may also contain other additives including, but not limited to, processing aids, fillers, coupling agents, ultraviolet absorbers or stabilizers, antistatic agents, nucleating agents, slip agents, plasticizers, lubricants, viscosity control agents, tackifiers, anti-blocking agents, surfactants, extender oils, acid scavengers, flame retardants, and metal deactivators. Additives, other than fillers, are typically used in amounts ranging from 0.01 or less to 10 or more wt% based on total composition weight. Fillers are generally added in larger amounts although the amount can range from as low as 0.01 or less to 65 or more wt% based on the weight of the composition. Illustrative examples of fillers include clays, precipitated silica and silicates, fumed silica, calcium carbonate, ground minerals, aluminum trihydroxide, magnesium hydroxide, and carbon blacks with typical arithmetic mean particle sizes larger than 15 nanometers.

Additionally, an antioxidant can be employed with the polymeric coating composition. Exemplary antioxidants include hindered phenols (e.g., tetrakis [methylene (3,5-di-t-butyl-4-hydroxyhydrocinnamate)] methane); phosphites and phosphonites (e.g., tris (2,4-di-t-butylphenyl) phosphate); thio compounds (e.g., dilaurylthiodipropionate); various siloxanes; and various amines (e.g., polymerized 2,2,4-trimethyl-1,2-dihydroquinoline). Antioxidants can be used in amounts of 0.1 to 5 wt% based on the total weight of the polymeric coating composition. In the formation of wire and cable compositions, antioxidants are typically added to the system before processing (i.e., prior to extrusion and cross-linking) of the finished article.

Preparation of the polymeric coating composition can comprise compounding the above-described components. Compounding of the polymeric coating composition can be effected by standard equipment known to those skilled in the art. Examples of compounding equipment are internal batch mixers, such as a Brabender™, Banbury™, or Bolling™ mixer. Alternatively, continuous single or twin screw, mixers can be used, such as a Farrel™ continuous mixer, a Werner and Pfleiderer™ twin screw mixer, or a Buss™ kneading continuous extruder. Compounding can be performed at a temperature of greater than the melting temperature of the ethylene polymer up to a temperature above which the ethylene polymer begins to degrade. In various embodiments, compounding can be performed at a temperature ranging from 100 to 200 °C, or from 110 to 150 °C.

*Coated Conductor*

A cable comprising a conductor and an insulation layer can be prepared employing the above-described polymeric coating composition. "Cable" and "power cable" mean at least one wire or optical fiber within a sheath, e.g., an insulation covering or a protective outer jacket. Typically, a cable is two or more wires or optical fibers bound together, typically in a common insulation covering and/or protective jacket. The individual wires or fibers inside the sheath may be bare, covered or insulated. Combination cables may contain both electrical wires and optical fibers. The cable can be designed for low, medium, and/or high voltage applications. Typical cable designs are illustrated in USP 5,246,783, 6,496,629 and 6,714,707. "Conductor" denotes one or more wire(s) or fiber(s) for conducting heat, light, and/or electricity. The conductor may be a single-wire/fiber or a multi-wire/fiber and may be in strand form or in tubular form. Nonlimiting examples of suitable conductors include metals such as silver, gold, copper, carbon, and aluminum. The conductor may also be optical fiber made from either glass or plastic.

Such a cable can be prepared with various types of extruders (e.g., single or twin screw types) by extruding the polymeric coating composition onto the conductor. A description of a conventional extruder can be found in USP 4,857,600. An example of co-extrusion and an extruder therefore can be found in USP 5,575,965.

Following extrusion, the extruded cable can pass into a heated cure zone downstream of the extrusion die to aid in cross-linking the polymeric coating composition and thereby produce a cross-linked polymeric coating composition. The heated cure zone can be maintained at a temperature in the range of 175 to 260 °C. The heated zone can be heated by pressurized steam or inductively heated by pressurized nitrogen gas. In an embodiment, the heated cure zone is a continuous vulcanization ("CV") tube.

In various embodiments, the cross-linked polymeric coating composition can then be cooled (e.g., to ambient temperature).

The cross-linking process can create volatile decomposition byproducts in the cross-linked polymeric coating composition. The term "volatile decomposition products" denotes decomposition products formed during the curing step, and possibly during the cooling step, by initiation of the free radical generating agent (e.g., dicumyl peroxide). Such byproducts can comprise alkanes, such as methane. Additional byproducts can include alcohols. Such alcohols can comprise the alkyl, aryl, alkaryl, or aralkyl moieties of the above-described organic peroxide. For instance, if dicumyl peroxide is employed as a cross-linking agent, the byproduct alcohol is cumyl alcohol. Other decomposition products can include ketones decomposed from the above-described organic peroxide. For example, acetophenone is a decomposition byproduct of dicumyl peroxide. In one embodiment, "byproducts" shall denote any component that volatilizes at 80 °C, at a pressure of 1 atm (101,325 Pa), over a time period of 6 hours.

In various embodiments, the cross-linked polymeric coating composition initially comprises (i.e., before degassing, described below) methane in a maximum amount of 750 parts per million ("ppm") or less, 700 ppm or less, or 650 ppm or less, based on the entire weight of the cross-linked polymeric coating composition.

Following cross-linking, the cross-linked polymeric coating composition can undergo degassing to remove at least a portion of the volatile decomposition byproducts. Degassing can be performed at a degassing temperature, a degassing pressure, and for a degassing time period to produce a degassed polymeric coating composition. In various embodiments, the degassing temperature can range from 50 to 150 °C, or from 60 to 80 °C. In an embodiment, the degassing temperature is 65 to 75 °C. Degassing can be conducted under standard atmosphere pressure (i.e., 101,325 Pa).

Employing a polybutadiene cross-linking coagent can decrease the amount of time required to degas the polymeric coating composition while maintaining cross-link density. Since degassing time depends not only on composition but also on, among others, the cable size, cable structure, and curing conditions, two indicators can be used to measure the degassing time reduction through composition modification: (1) relative degassing time reduction compared to a reference coated conductor having at least 41 wt% greater organic peroxide loading, based on the combined weight of the polyethylene and the organic peroxide; and (2) percentage in peroxide reduction relative to the polyethylene reference material. These two indicators correlate with each other. For example, since most of the byproduct is decomposed from peroxide, a 50% reduction in degassing time can result from a 29% reduction in peroxide loading to achieve an overall reduction in volatile decomposition byproducts of at least 50 wt%. The reference coated conductor is crosslinked and cooled by the same process and has the same structure and composition as the inventive coated conductor, except not containing any polybutadiene, and containing at least 41% more organic peroxide. Further, preparation and sample dimensions are the same for the reference and inventive coated conductors, including cable size, structure, extrusion coating, curing, cooling and degassing.

When comparing an inventive coated conductor to a reference coated conductor, the byproduct content reduction (for total byproducts as well as individual components) is based on the initial byproduct content (i.e., prior to degassing) of the reference coated conductor for each of the inventive coated conductor and the reference coated conductor. For example, if the reference coated conductor has 1 wt% byproduct content prior to degassing, a reduction to 0.5 wt% byproduct content would be a 50% reduction in byproduct content. Similarly, for the inventive coated conductor, a

reduction to 0.5 wt% byproduct content shall be considered a 50% reduction in byproduct content, even if the initial byproduct content of the inventive coated conductor prior to degassing is less than 1 wt%.

In an embodiment, the degassing step is sufficient to achieve at least a 50 wt% reduction in total volatile decomposition byproducts, and is carried out for a time period that is at least 30%, at least 40%, at least 50%, at least 60%, or at least 70% shorter than the degassing time period required for a reference cable to achieve the same 50 wt% reduction of total volatile decomposition byproducts. Total byproduct loss is determined via thermogravimetric analysis ("TGA") using a temperature ramp of 10 °C/min to 80 °C, and holding the temperature at 80 °C for 6 hours.

Furthermore, in various embodiments, the degassing time period is sufficient to achieve at least a 50 wt% reduction in methane content, and is carried out for a time period that is at least 30%, at least 40%, at least 50%, at least 60%, or at least 70% shorter than the degassing time period required for the reference cable to achieve the same 50 wt% reduction of methane. Additionally, in various embodiments, the degassing time period is sufficient to achieve at least a 50 wt% reduction in acetophenone content, and is carried out for a time period that is at least 30%, at least 40%, at least 50%, at least 60%, or at least 70% shorter than the degassing time period required for the reference cable to achieve the same 50 wt% reduction of acetophenone. Also, in various embodiments, the degassing time period is sufficient to achieve at least a 50 wt% reduction in cumyl alcohol content, and is carried out for a time period that is at least 30%, at least 40%, at least 50%, at least 60%, or at least 70% shorter than the degassing time period required for the reference cable to achieve the same 50 wt% reduction of cumyl alcohol.

In an embodiment, the inventive cable and the reference cable each achieve a cross-link density sufficient to provide an MH-ML (as described below) of at least 3 deciNewton meters ("dN·m").

In an embodiment, when the degassing time period is 15 minutes and the degassing temperature is 80 °C, at least 65, at least 70, at least 75, or at least 80 wt% of methane is removed from the cross-linked polymeric coating composition, based on the methane content of the cross-linked polymeric coating composition prior to degassing. In various embodiments, when the degassing time period is 15 minutes and the degassing temperature is 80 °C, the degassed polymeric coating composition has a methane content of less than 300, less than 250, less than 200, less than 150, or less than 130 ppm.

In an embodiment, when the degassing time is 15 minutes and the degassing temperature is 80 °C, the degassed polymeric coating composition has an acetophenone content of less than 0.6, less than 0.5, or less than 0.4 wt%, as determined by head space gas chromatography ("HSGC"), employing the procedures described in the following examples.

In an embodiment, when the degassing time is 60 minutes and the degassing temperature is 80 °C, the degassed polymeric coating composition has an acetophenone content of less than 0.5, less than 0.4 or 0.3 wt%, as determined by HSGC of said polymeric coating composition during said degassing.

In an embodiment, when the degassing time is 2.5 minutes and the degassing temperature is 175 °C, the degassed polymeric coating composition has a total byproduct content of less than 0.8, less than 0.75, less than 0.7, less than 0.65, less than 0.6, less than 0.55, or 0.5 wt%, as determined by weight loss of said polymeric coating composition during said degassing. Byproduct content can be determined via TGA, using a temperature ramp of 100 °C/min to 175 °C, and holding at 175 °C for 30 minutes.

In an embodiment, when the degassing time is 30 minutes and the degassing temperature is 80 °C, the degassed polymeric coating composition has a total byproduct content of less than 0.6, less than 0.55, or 0.5 wt%, as determined by weight loss of said polymeric coating composition during said degassing. Byproduct content can be determined via TGA, using a temperature ramp of 10 °C/min to 80 °C, and holding at 80 °C for 6 hours.

The extent of cross-linking in the above-described materials can be determined via analysis on a moving die rheometer ("MDR") at 182 °C according to ASTM D5289. Upon analysis, an increase in torque, as indicated by the difference between the maximum torque ("MH") and the minimum torque ("ML") ("MH-ML"), indicates greater degree of cross-linking. The resulting cross-linked and degassed polymeric coating composition can have an MH-ML of at least 2.5 dN·m, at least 2.75 dN·m, at least 3 dN·m, at least 3.25 dN·m, at least 3.5 dN·m, at least 3.75 dN·m, or at least 3.84 dN·m, with a practical upper limit of 5 dN·m. In an embodiment, the cross-linked and degassed polymeric coating composition can have an MH-ML in the range of from 2.5 dN·m to 3.84 dN·m, in the range of from 2.75 dN·m to 3.84 dN·m in the range of from 3 dN·m to 3.84 dN·m, in the range of from 3.25 dN·m to 3.84 dN·m, in the range of from 3.5 dN·m to 3.84 dN·m, or in the range of from 3.75 dN·m to 3.84 dN·m.

Alternating current cables prepared according to the present disclosure can be low voltage, medium voltage, high voltage, or extra-high voltage cables. Further, direct current cables prepared according to the present disclosure include high or extra-high voltage cables.

TEST METHODS

*Sample preparation*

Feed DFDA 4850 ethylene polymer ("PE") (available from The Dow Chemical Company, Midland, MI, USA) pellets into a Brabender mixer at 130 °C with a roll speed of 30 rpm and premix the polybutadiene once the PE melts. Mixing time after addition of polybutadiene is 5 min. Heat the resultant compound in an oven at 90 °C for 1 hour, then feed into a two roll mill at 120 °C. Once the PE melts, the peroxide is added drop-wise, followed by mixing at roll speed of 12 rpm and roll distance of 0.6 mm for 4 minutes.

*Compression molding to prepare cured plaque with thickness of 1mm or 0.3mm*

Using a Lab Tech LP-S-50/ASTM laboratory hydraulic press, preheat the sample covered by two polyethylene terephthalate ("PET") membranes in the mold at 130 °C for 5 minutes. Release the air trapped in the sample by operation of plate open/close 8 times. Increase the plate temperature to 182 °C over 5 minutes. Cure the sample under a pressure of 100 kN for 15 minutes. Decrease the plate temperature to 45 °C over 5 minutes.

*Moving Die Rheometer*

Perform moving die rheometer ("MDR") testing at 182 °C according to the methods described in ASTMD5289 on an Alpha Technologies MDR 2000.

*Mechanical (Tensile) Properties*

Determine mechanical properties according to ASTM D638 on an Instron model 5565 tensile tester.

*Multiple Headspace Extraction via Headspace Gas Chromatography*

Multiple Headspace Extraction ("MHE") using Headspace Gas Chromatography ("HSGC") is performed using the following conditions:

| Instrumentation | |
|---|---|
| Gas chromatograph | Agilent 6890 |
| Injection port | Split/splitless |
| Column | DB-5MS, 30 m x 0.32 mm x 1.0 mm |
| Detector | FID |
| Sample introduction | G1888 |
| Data collection | ChemStation |

| G1888 Headspace Conditions | |
|---|---|
| GC cycle time | 60 minutes |
| Oven temperature | 150°C |
| Loop temperature | 160°C |
| Transfer line temperature | 170°C |
| Vial equilibration time | 60 minutes |
| Shaking speed | Off |
| Loop fill time | 0.20 minutes |
| Loop equilibration time | 0.05 minutes |
| Inject time | 0.50 minutes |
| Pressurization time | 0.50 minutes |
| Advance functions | Multi HS EXT on; 5 extractions per vial |

**6890 GC Conditions**

| | |
|---|---|
| Carrier gas (EPC) | Nitrogen, 2.0 mL/min |
| Inlet temperature | 250°C |
| Split ratio | 1:10 |
| Flow mode | Constant flow |
| FID temperature | 300°C |
| Oven Program | 40°C, hold for 3 min;<br>ramp to 280°C at a rate of 15°C/min;<br>hold for 5 minutes. (24 min in all) |
| Detector | FID @ 300°C;<br>Hydrogen 40 mL/min; Air 450 mL/min; Make up (Nitrogen) 45 mL/min |

In MHE, the sample is equilibrated at some temperature for a given amount of time and the headspace above the sample is analyzed. This equilibration and measurement process is repeated multiple times and an exponential decrease in the peak areas is observed. About 1.0 g samples are placed into 22-mL headspace vials and analyzed according to the conditions given above.

Eq. (1):

$$\sum_{n=1}^{\infty} A_n = A_1 / (1 - e^{-K})$$

$A_n$ = the peak area of the $n^{th}$ injection
$A_1$ = the peak area of the $1^{st}$ injection

According to Eq. (1), only two values are needed to calculate the total peak areas: A1, and the constant K. The former is a measured value while the latter can be obtained from linear regression analysis of the following equation:

Eq. (2):

$$\ln A_n = -K(n-1) + \ln A_1$$

Having the sum of the peak area values one only needs a calibration factor expressing the relationship between peak area and the concentration (amount) of the analyte.

<u>Methane standard calibration curve</u>

Inject the following methane amounts into HSGC vials, 200 μl, 400 μl, 500 μl, 600 μl, 800 μl and 1000 μl. Build up the correlation between total peak area ($\sum_{n=1}^{\infty} A_n$) and methane content. Put two pieces of the sample (prepared as described above) with size of 10mm*50mm*1mm into HSGC vial for HSGC test to get the total peak area ($\sum_{n=1}^{\infty} A_n$). Then prepare a standard calibration curve of area versus μl of methane, and use this standard calibration curve to calculate the methane content based on the total peak area ($\sum_{n=1}^{\infty} A_n$) for each sample.

<u>Acetophenone standard calibration curve</u>

The standard samples with different acetophenone loadings are prepared by imbibing the acetophenone into

cured samples at 40 °C for different time periods to achieve different acetophenone loading samples. Build up the correlation between total peak area ($\sum_{n=1}^{\infty} A_n$) and acetophenone loading. Put two pieces of the sample (prepared as described above) with a size of 10mm*50mm*1mm into HSGC vial for HSGC test to get the total peak area ($\sum_{n=1}^{\infty} A_n$). Then prepare a standard calibration curve of area versus percent acetophenone, and use this standard calibration curve to calculate the acetophenone content base on the total peak area ($\sum_{n=1}^{\infty} A_n$) for each sample.

EXAMPLES

**Example 1 - Mechanical Analyses**

Prepare a comparative sample (CE1) and three samples (E1-E3) according to the weight ratios provided in Table 1, below. The ethylene polymer ("PE") matrix is DFDA 4850 (available from The Dow Chemical Company, Midland, MI, USA), a low density polyethylene ("LDPE") having anti-oxidant blended therein. The dicumyl peroxide ("DCP") employed has a purity of 99% (available from Shanghai FangRuiDa Chemical, China). The polybutadiene coagent is RICON™ 153 (available from Cray Valley Technology, USA LLC), a liquid polybutadiene resin having a 1,2-vinyl content of 85% and a number average molecular weight of 4,700 g/mol.

**Table 1: Sample Constitution**

| Sample: | CE1 | E1 | E2 | E3 |
|---|---|---|---|---|
| **DFDA 4850 (wt%)** | 98.3 | 96.6 | 96.8 | 95.88 |
| **DCP (wt%)** | 1.7 | 1.4 | 1.2 | 1.12 |
| **RICON™ 153 (wt%)** | | 2 | 2 | 3 |
| **Total:** | 100 | 100 | 100 | 100 |

Prepare the samples for mechanical and dielectric testing according to the sample preparation and compression molding procedures described above.

Analyze each of the samples outlined in Table 1 for mechanical performance according to ASTM D638. Results of these analyses are provided in Table 2, below.

**Table 2: Curing and Mechanical Performance**

| Sample: | CE1 | E1 | E2 | E3 |
|---|---|---|---|---|
| **ML (dN·m)** | 0.19 | 0.18 | 0.17 | 0.17 |
| **MH (dN·m)** | 3.39 | 4.02 | 3.38 | 3.38 |
| **MH-ML (dN·m)** | 3.2 | 3.84 | 3.21 | 3.21 |
| **Tensile Elongation ("TE") at break (%)** | 580.7 | 505.7 | 524.3 | 416.6 |
| **TE Std. Dev.** | 14.4 | 8.34 | 31.8 | 12.8 |
| **Tensile Strength ("TS") at break, (MPa)** | 15.33 | 19.62 | 17.67 | 18.47 |
| **TS Std. Dev.** | 0.64 | 1.14 | 1.07 | 0.99 |

MDR results showed MH-ML increased after the incorporation of RICON™ 153, indicating a higher cross-link density. This result suggests that crosslinking density can be increased by RICON™ 153.

**Example 2 - Degassing Behavior**

To simulate degassing behavior, analyze comparative sample CE1 and samples E1 and E2, prepared as described above in Example 1, via thermogravimetric analysis ("TGA") according to the following procedures. Two temperature regimes are used: 80 °C and 175 °C. For the 80 °C TGA (samples CE1 and E2 only), increase temperature to 80 °C at a rate of 10 °C/min, then hold at 80 °C for 6 hours. For the 175 °C TGA (samples CE1, E1, and E2), increase temperature to 175 °C at 100 °C/min, then hold at 175 °C for 30 minutes. Results of these analyses are provided in Tables 3 and 4, below.

**Table 3: Weight loss after degassing at 80 °C for 6h**

| Sample: | CE1 | E2 |
|---|---|---|
| **Weight Loss (%)** | 1.1 | 0.9 |
| **Residue (%)** | 98.9 | 99.1 |

**Table 4: Weight loss after degassing at 175 °C for 30min**

| Sample: | CE1 | E1 | E2 |
|---|---|---|---|
| **Weight Loss (%)** | 1.3 | 1.1 | 0.8 |
| **Residue (%)** | 98.7 | 98.9 | 99.2 |

TGA results show that weight loss decreases significantly with use of polybutadiene coagent. The larger the loading of polybutadiene coagent and the lower peroxide loading, the less weight loss of the samples, suggesting that byproducts largely decrease with incorporation of polybutadiene coagent and lower loading of peroxide.

Perform TGA on samples CE1 and E2 at a constant 80 °C according to the above-described TGA procedure. Plots of TGA are provided in FIG. 1. As seen in FIG. 1, it only takes about 30 minutes to reach a byproduct residue level of 0.5% in E2 having the polybutadiene coagent. However, it takes nearly 50 minutes to reach the same byproduct residue level in CE1.

Perform TGA on samples CE1 and E2 at a constant 175 °C according to the above-described TGA procedure. Plots of TGA are provided in FIG. 2. As seen in FIG. 2, it takes only about 2.5 minutes to reach a byproduct residue level of 0.5% in E2 having the polybutadiene coagent. However, it takes nearly 4.2 minutes to reach the same byproduct residue level in CE1.

**Example 3 - Methane and Acetophenone Content Analyses**

Measure the amount of methane at start (0 minutes), 15 minutes, and 60 minutes during degassing at 80 °C for samples CE1 and E2. For acetophenone, an additional measurement is taken at 300 minutes. Methane and acetophenone content is determined according to the following procedure:

a. prepare sample plaques according to the compression molding procedures described above;
b. cut the center of the sample plaques into pieces with uniform size 10 mm x 50 mm x 1 mm with PET membrane still covered on both sides;
c. peel the PET membrane and immediately place them into an oven at 80 °C, and degas the samples for the prescribed time periods. Place the 0-minute sample directly into a headspace vial immediately after removing the PET membrane;
d. remove the samples and place them into individual headspace vials after their respective degassing time periods;
e. use MHE via HSGC as described above to detect the methane and acetophenone content. Three specimens are analyzed for each time period.

Results of methane content analyses are provided in Table 5, below.

**Table 5: Methane Content Analyses**

| Material: | CE1 | E2 |
|---|---|---|
| **Methane, 0 min. (ppm)** | 863.7 | 637.8 |

(continued)

| Material: | CE1 | E2 |
|---|---|---|
| **Methane, 15 min. (ppm)** | 371.1 | 125.7 |
| **Methane, 60 min. (ppm)** | 6.6 | 3.3 |

As can be seen in Table 5, after 15 minutes of degassing the sample prepared without the polybutadiene coagent still has nearly three times the amount of methane compared to the sample prepared with the polybutadiene coagent. This indicates that cable coatings prepared with the polybutadiene cross-linking coagent and lower peroxide loading require less degassing time.

Similar results are obtained for acetophenone. Results of the acetophenone content analyses are provided in Table 6, below.

**Table 6: Acetophenone Content Analyses**

| Material: | CE1 | E2 |
|---|---|---|
| **Acetophenone, 0 min. (ppm)** | 5701.0 | 3854.0 |
| **Acetophenone, 15 min. (ppm)** | 4074.7 | 2998.0 |
| **Acetophenone, 60 min. (ppm)** | 3064.8 | 2193.5 |
| **Acetophenone, 300 min. (ppm)** | 664.5 | 461.3 |

## Claims

**1.** A process for producing a coated conductor, said process comprising:

(a) coating a conductor with a polymeric coating composition, wherein said polymeric coating composition comprises an ethylene polymer, an organic peroxide, and a polybutadiene;
(b) cross-linking at least a portion of said polymeric coating composition thereby producing a cross-linked polymeric coating composition, wherein said cross-linking produces one or more byproducts, wherein said byproducts comprise methane, acetophenone, or both; and
(c) degassing at least a portion of said cross-linked polymeric coating composition for a degassing time period and at a degassing temperature to remove at least a portion of said byproducts thereby producing a degassed polymeric coating composition,

wherein said degassing time period of step (c) is sufficient to achieve a reduction in methane content and/or acetophenone content of at least 50 wt% and is at least 30% less than the degassing time period required for a reference coated conductor to achieve the same reduction in methane and/or acetophenone content, wherein said methane content reduction and/or acetophenone content reduction is determined from the methane content and/or acetophenone content of said reference coated conductor prior to said degassing for each of said coated conductor and said reference coated conductor,
wherein said reference coated conductor has the same composition and structure, and is prepared in same manner as the coated conductor, except that the polymeric coating composition of the reference coated conductor comprises at least 41 wt% more organic peroxide and does not contain any polybutadiene wherein when said degassing time period is 15 minutes, said degassing temperature is 80 °C, and said cross-linked polymeric coating composition has a thickness of 1 mm, at least 65 wt% of said methane is removed from said cross-linked polymeric coating composition during said degassing of step (c).

**2.** The process of claim 1, wherein when said degassing time period is 15 minutes, said degassing temperature is 80 °C, and said cross-linked polymeric coating composition has a thickness of 1 mm, said degassed polymeric coating composition has a methane content of less than 300 parts per million ("ppm").

**3.** The process of any of the foregoing claims, wherein said degassing time period of step (c) is sufficient to achieve a reduction in total byproduct content of at least 50 wt% and is at least 30% less than the degassing time period required for said reference coated conductor to achieve the same reduction in total byproduct content.

4. The process of any of the foregoing claims, wherein said cross-linked polymeric coating composition has an MH-ML of at least 3 dN·m, wherein the polymeric coating composition of said reference coated conductor has an MH-ML of at least 3 dN·m wherein MH-ML is determined by Moving Die Rheometer (MDR) according to the method described in ASTM D5289.

5. The process of any of the foregoing claims, wherein said polybutadiene is present in said polymeric coating composition in an amount ranging from 0.1 to 10 weight percent, based on the combined weight of said ethylene polymer, said organic peroxide, and said polybutadiene; wherein said polymeric coating composition comprises said organic peroxide in an amount of less than 1.7 weight percent, based on the combined weight of said ethylene polymer and said organic peroxide; wherein said polymeric coating composition comprises said ethylene polymer in an amount ranging from 80 to 99 weight percent based on the combined weight of said ethylene polymer, said organic peroxide, and said polybutadiene.

6. The process of any of the foregoing claims, wherein said polybutadiene has a 1,2-vinyl content of at least 80 weight percent based on the entire weight of said polybutadiene, wherein said polybutadiene has a number average molecular weight of 10,000 g/mol or less.

7. The process of any of the foregoing claims, wherein said organic peroxide is dicumyl peroxide, wherein said byproducts further comprise acetophenone and cumyl alcohol.

8. A cable prepared according to the process of any of the foregoing claims.

9. The cable according to claim 8, wherein said cable is a medium voltage, high voltage, or extra-high voltage cable.

**Patentansprüche**

1. Ein Verfahren zum Produzieren eines beschichteten Leiters, wobei das Verfahren Folgendes beinhaltet:

(a) Beschichten eines Leiters mit einer polymeren Beschichtungszusammensetzung, wobei die polymere Beschichtungszusammensetzung ein Ethylenpolymer, ein organisches Peroxid und ein Polybutadien beinhaltet;
(b) Vernetzen mindestens eines Teils der polymeren Beschichtungszusammensetzung, wodurch eine vernetzte polymere Beschichtungszusammensetzung produziert wird, wobei das Vernetzen ein oder mehrere Nebenprodukte produziert, wobei die Nebenprodukte Methan, Acetophenon oder beides beinhalten; und
(c) Entgasen mindestens eines Teils der vernetzten polymeren Beschichtungszusammensetzung über eine Entgasungszeitdauer und bei einer Entgasungstemperatur, um mindestens einen Teil der Nebenprodukte zu entfernen, wodurch eine entgaste polymere Beschichtungszusammensetzung produziert wird,

wobei die Entgasungszeitdauer von Schritt (c) ausreicht, um eine Reduzierung des Methangehalts und/oder Acetophenongehalts um mindestens 50 Gew.-% zu erzielen, und mindestens 30 % kürzer ist als die Entgasungszeitdauer, die für einen beschichteten Referenzleiter erforderlich ist, um dieselbe Reduzierung des Methan- und/oder Acetophenongehalts zu erzielen, wobei die Methangehaltsreduzierung und/oder Acetophenongehaltsreduzierung aus dem Methangehalt und/oder Acetophenongehalt des beschichteten Referenzleiters vor dem Entgasen für jeden von dem beschichteten Leiter und dem beschichteten Referenzleiter bestimmt wird,
wobei der beschichtete Referenzleiter dieselbe Zusammensetzung und Struktur wie der beschichtete Leiter aufweist und auf dieselbe Weise wie der beschichtete Leiter hergestellt wird, mit der Ausnahme, dass die polymere Beschichtungszusammensetzung des beschichteten Referenzleiters zu mindestens 41 Gew.-% mehr organisches Peroxid beinhaltet und kein Polybutadien enthält, wobei, wenn die Entgasungszeitdauer 15 Minuten beträgt, die Entgasungstemperatur 80 °C beträgt, und die vernetzte polymere Beschichtungszusammensetzung eine Dicke von 1 mm aufweist, wobei während der Entgasung von Schritt (c) mindestens 65 Gew.-% des Methans aus der vernetzten polymeren Beschichtungszusammensetzung entfernt wird.

2. Verfahren gemäß Anspruch 1, wobei, wenn die Entgasungszeitdauer 15 Minuten beträgt, die Entgasungstemperatur 80 °C beträgt, und die vernetzte polymere Beschichtungszusammensetzung eine Dicke von 1 mm aufweist, wobei die entgaste polymere Beschichtungszusammensetzung einen Methangehalt von weniger als 300 Teile pro Million ("ppm") aufweist.

3. Verfahren gemäß einem der vorhergehenden Ansprüche, wobei die Entgasungszeitdauer von Schritt (c) ausreicht,

um eine Reduzierung des Gesamtnebenproduktgehalts um mindestens 50 Gew.-% zu erzielen, und mindestens 30 % kürzer ist als die Entgasungszeitdauer, die für den beschichteten Referenzleiter erforderlich ist, um dieselbe Reduzierung des Gesamtnebenproduktgehalts zu erzielen.

**4.** Verfahren gemäß einem der vorhergehenden Ansprüche, wobei die vernetzte polymere Beschichtungszusammensetzung einen MH-ML-Wert von mindestens 3 dN·m aufweist, wobei die polymere Beschichtungszusammensetzung des beschichteten Referenzleiters einen MH-ML-Wert von mindestens 3 dN·m aufweist, wobei der MH-ML Wert mittels MDR (Moving Die Rheometer) nach der in ASTM D5289 beschriebenen Methode bestimmt wird.

**5.** Verfahren gemäß einem der vorhergehenden Ansprüche, wobei das Polybutadien in der polymeren Beschichtungszusammensetzung in einer Menge im Bereich von 0,1 bis 10 Gewichtsprozent, bezogen auf das kombinierte Gewicht des Ethylenpolymers, des organischen Peroxids und des Polybutadiens, vorhanden ist; wobei die polymere Beschichtungszusammensetzung das organische Peroxid in einer Menge von weniger als 1,7 Gewichtsprozent, bezogen auf das kombinierte Gewicht des Ethylenpolymers und des organischen Peroxids, beinhaltet; wobei die polymere Beschichtungszusammensetzung das Ethylenpolymer in einer Menge im Bereich von 80 bis 99 Gewichtsprozent, bezogen auf das kombinierte Gewicht des Ethylenpolymers, des organischen Peroxids und des Polybutadiens, beinhaltet.

**6.** Verfahren gemäß einem der vorhergehenden Ansprüche, wobei das Polybutadien einen 1,2-Vinylghalt von mindestens 80 Gewichtsprozent, bezogen auf das Gesamtgewicht des Polybutadiens, aufweist, wobei das Polybutadien ein Molekulargewicht im Zahlenmittel von 10 000 g/mol oder weniger aufweist.

**7.** Verfahren gemäß einem der vorhergehenden Ansprüche, wobei das organische Peroxid Dicumylperoxid ist, wobei die Nebenprodukte ferner Acetophenon und Cumylalkohol beinhalten.

**8.** Ein Kabel, das nach dem Verfahren gemäß einem der vorhergehenden Ansprüche hergestellt ist.

**9.** Kabel gemäß Anspruch 8, wobei das Kabel ein Mittelspannungs-, Hochspannungs- oder Höchstspannungskabel ist.

## Revendications

**1.** Un procédé de production d'un conducteur revêtu, ledit procédé comprenant :

(a) le revêtement d'un conducteur avec une composition de revêtement polymérique, dans lequel ladite composition de revêtement polymérique comprend un polymère d'éthylène, un peroxyde organique, et un polybutadiène ;
(b) la réticulation d'au moins une portion de ladite composition de revêtement polymérique, produisant de ce fait une composition de revêtement polymérique réticulée, dans lequel ladite réticulation produit un ou plusieurs sous-produits, dans lequel lesdits sous-produits comprennent le méthane, l'acétophénone, ou les deux ; et
(c) le dégazage d'au moins une portion de ladite composition de revêtement polymérique réticulée pendant une durée de dégazage et à une température de dégazage afin d'enlever au moins une portion desdits sous-produits, produisant de ce fait une composition de revêtement polymérique dégazée,

dans lequel ladite durée de dégazage de l'étape (c) est suffisante pour atteindre une réduction de la teneur en méthane et/ou de la teneur en acétophénone d'au moins 50 % en poids et est au moins inférieure de 30 % à la durée de dégazage requise pour un conducteur revêtu de référence pour atteindre la même réduction de la teneur en méthane et/ou en acétophénone, dans lequel ladite réduction de la teneur en méthane et/ou réduction de la teneur en acétophénone est déterminée à partir de la teneur en méthane et/ou de la teneur en acétophénone dudit conducteur revêtu de référence avant ledit dégazage pour chacun dudit conducteur revêtu et dudit conducteur revêtu de référence,
dans lequel ledit conducteur revêtu de référence a la même composition et structure, et est préparé de la même manière que le conducteur revêtu, sauf que la composition de revêtement polymérique du conducteur revêtu de référence comprend au moins 41 % en poids de peroxyde organique de plus et ne contient aucun polybutadiène,
dans lequel lorsque ladite durée de dégazage est de 15 minutes, ladite température de dégazage est de 80 °C, et ladite composition de revêtement polymérique réticulée a une épaisseur de 1 mm, au moins 65 % en poids dudit méthane est retiré de ladite composition de revêtement polymérique réticulée durant ledit dégazage de l'étape (c).

2. Le procédé de la revendication 1, dans lequel lorsque ladite durée de dégazage est de 15 minutes, ladite température de dégazage est de 80 °C, et ladite composition de revêtement polymérique réticulée a une épaisseur de 1 mm, ladite composition de revêtement polymérique dégazée a une teneur en méthane inférieure à 300 parties par million (« ppm »).

3. Le procédé de n'importe lesquelles des revendications précédentes, dans lequel ladite durée de dégazage de l'étape (c) est suffisante pour atteindre une réduction de la teneur en sous-produits totale d'au moins 50 % en poids et est au moins inférieure de 30 % à la durée de dégazage requise pour que ledit conducteur revêtu de référence atteigne la même réduction de la teneur en sous-produits totale.

4. Le procédé de n'importe lesquelles des revendications précédentes, dans lequel ladite composition de revêtement polymérique réticulée a un MH-ML d'au moins 3 dN·m, dans lequel la composition de revêtement polymérique dudit conducteur revêtu de référence a un MH-ML d'au moins 3 dN·m dans lequel MH-ML est déterminé par rhéomètre à chambre oscillante (MDR) conformément à la méthode décrite dans l'ASTM D5289.

5. Le procédé de n'importe lesquelles des revendications précédentes, dans lequel ledit polybutadiène est présent dans ladite composition de revêtement polymérique dans une quantité se trouvant dans la gamme allant de 0,1 à 10 pour cent en poids, rapporté au poids combiné dudit polymère d'éthylène, dudit peroxyde organique, et dudit polybutadiène ; dans lequel ladite composition de revêtement polymérique comprend ledit peroxyde organique dans une quantité inférieure à 1,7 pour cent en poids, rapporté au poids combiné dudit polymère d'éthylène et dudit peroxyde organique ; dans lequel ladite composition de revêtement polymérique comprend ledit polymère d'éthylène dans une quantité se trouvant dans la gamme allant de 80 à 99 pour cent en poids rapporté au poids combiné dudit polymère d'éthylène, dudit peroxyde organique, et dudit polybutadiène.

6. Le procédé de n'importe lesquelles des revendications précédentes, dans lequel ledit polybutadiène a une teneur en 1,2-vinyle d'au moins 80 pour cent en poids rapporté au poids dudit polybutadiène dans sa totalité, dans lequel ledit polybutadiène a une masse moléculaire moyenne en nombre de 10 000 g/mol ou inférieure.

7. Le procédé de n'importe lesquelles des revendications précédentes, dans lequel ledit peroxyde organique est le peroxyde de dicumyle, dans lequel lesdits sous-produits comprennent en outre l'acétophénone et l'alcool cumylique.

8. Un câble préparé conformément au procédé de n'importe lesquelles des revendications précédentes.

9. Un câble préparé conformément à la revendication 8, ledit câble étant un câble à moyenne tension, à haute tension, ou à très haute tension.

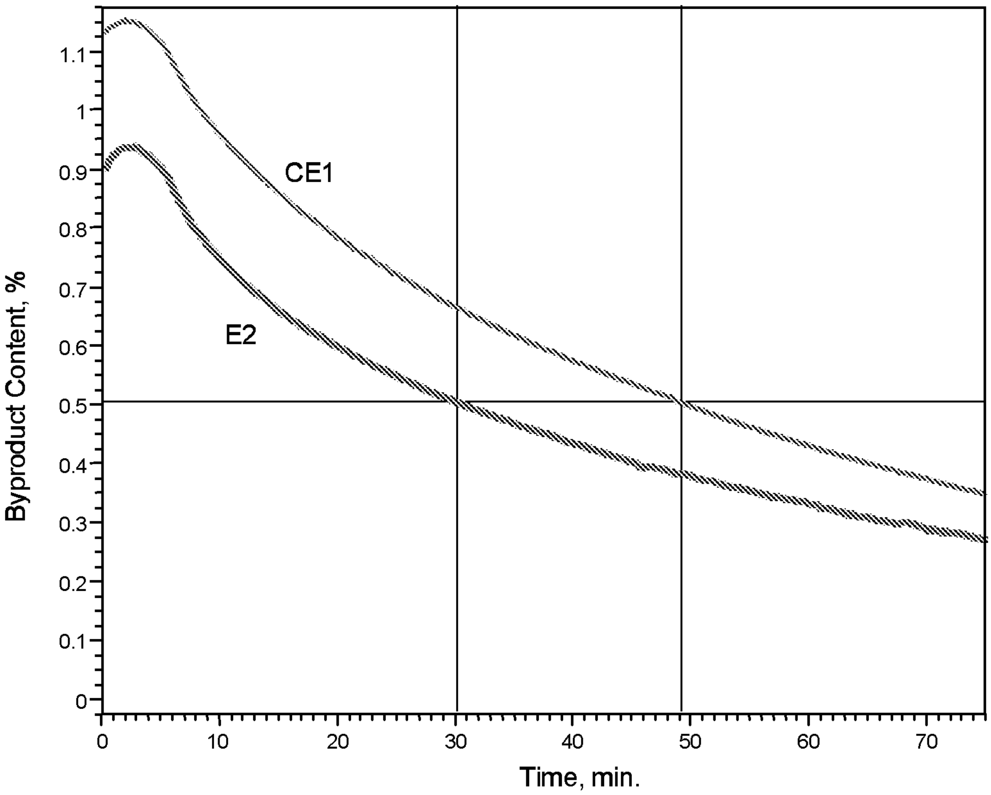
Byproduct Content, %
1.1
1
0.9
0.8
0.7
0.6
0.5
0.4
0.3
0.2
0.1
0
CE1
E2
0
10
20
30
40
50
60
70
Time, min.

**FIG. 1**

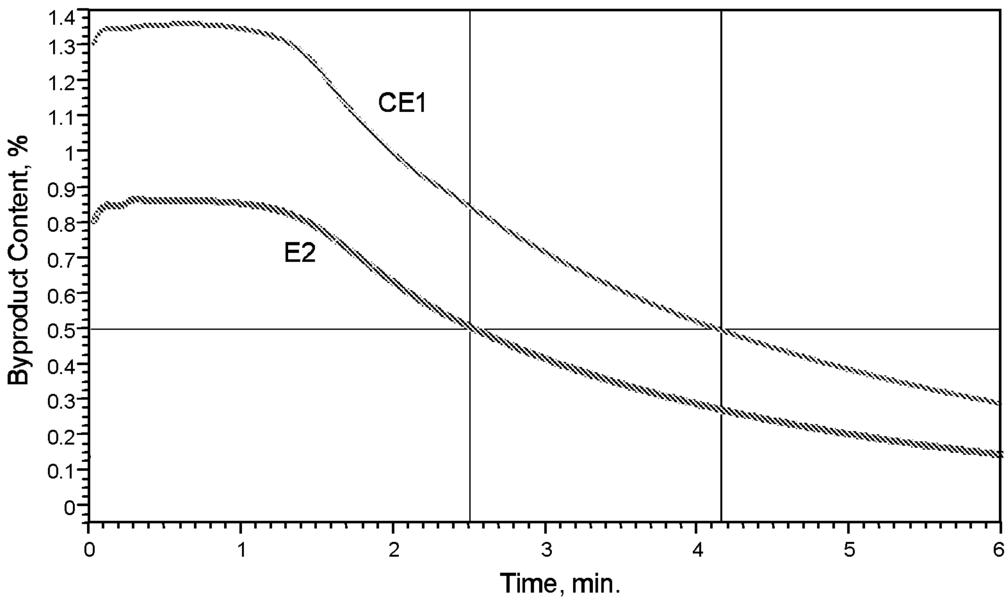
Byproduct Content, %
1.4
1.3
1.2
1.1
1
0.9
0.8
0.7
0.6
0.5
0.4
0.3
0.2
0.1
0
CE1
E2
0
1
2
3
4
5
6
Time, min.

FIG. 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US P5064802 A
- WO 9319104 A
- WO 9500526 A
- WO 9514024 A
- WO 9849212 A
- US P5246783 A
- US 6496629 B
- US 6714707 B
- US P4857600 A
- US P5575965 A